# EUROPEAN PATENT APPLICATION

(11) **EP 1 961 774 A1**
(43) Date of publication of application: **27.08.2008**
(21) Application number: 06834177.5
(22) Date of filing: 07.12.2006
(51) Int. Cl.: C08F 4/70, C08F 32/08

(54) **PROCESS FOR PRODUCTION OF CYCLIC OLEFIN ADDITION POLYMER**

(30) Priority: 12.12.2005 JP 2005357683
(71) Applicant: JSR Corporation, Tokyo 104-0045 (JP)
(72) Inventor: OSHIMA, Noboru, Chuo-ku, Tokyo 1040045 (JP); IMAMURA, Takashi, Chuo-ku, Tokyo 1040045 (JP); OHKITA, Kenzo, Chuo-ku, Tokyo 1040045 (JP)
(74) Representative: TBK-Patent
(86) International application number: PCT/JP2006/324422
(87) International publication number: WO 2007/069518

(57) **Abstract**

A process is provided whereby cycloolefin addition (co) polymers having excellent heat resistance, transparency and toughness and having a molecular weight adjusted such that the copolymers can form films, sheets and the like, are produced simply by using small amounts of a palladium catalyst and a molecular weight modifier without steps for removing the catalyst residues and unreacted monomers. The process for producing cycloolefin addition (co)polymers includes addition (co)polymerizing monomers including a cycloolefin compound as a main monomer, in the presence of ethene and catalysts including (a) an organic acid salt of palladium or a β-diketonate compound of palladium; (b) a cyclopentylphosphine compound; and (c) an ionic boron compound or an ionic aluminum compound.

## Description

### TECHNICAL FIELD

The present invention relates to a process for producing cycloolefin addition (co)polymers wherein high polymerization activity is achieved to enable the production with small amounts of catalyst components, and steps for removing the catalysts and unreacted monomers are eliminated. In the process for producing cycloolefin addition (co)polymers, the molecular weight is efficiently controlled simply by using a small amount of a molecular weight modifier, and therefore the usage of molecular weight modifiers is reduced. The process of the invention produces cycloolefin addition (co)polymers that have high heat resistance, transparency and toughness and have a controlled molecular weight, providing excellent formability into films and sheets.

### BACKGROUND ART

Inorganic glass is a traditional material used in the fields of lenses, and optical components and liquid crystal display elements such as backlights, light guide plates, TFT substrates and touch panels. But the material is increasingly replaced by optically transparent resins to meet demands for lightweight, downsizing and high density. Cycloolefin addition (co)polymers from norbornene(bicyclo[2.2.1]hepta-2-ene) and derivatives thereof receive attention as resins with high transparency, high heat resistance and low water absorption.

The cycloolefin addition (co)polymers have different molecular weights and stereoregularity depending on catalysts used in the polymerization. Consequently, they show great difference in solubility behavior in solvents. Known polymerization catalysts are titanium, zirconium, nickel, cobalt, chromium, palladium and the like. For example, norbornene homopolymers produced with zirconium metallocene catalysts are not soluble in general solvents (Non-patent Document 1). Norbornene homopolymers polymerized with nickel catalysts show high solubility in hydrocarbon solvents such as cyclohexane, but formed articles thereof are inferior in toughness and are brittle. Addition polymers from palladium-catalyzed polymerization have higher stereoregularity than those obtained with nickel catalysts (Non-patent Document 2), and have excellent dimensional stability and mechanical strength (Patent Document 6).

Polymerization catalysts containing palladium show high activity and are copolymerizable with polar cycloolefin compounds. As known in the art, many methods have been established for palladium-catalyzed addition polymerization of cycloolefins. Patent Document 6 discloses dimensionally stable crosslinked products and production thereof. Patent Document 1 discloses a process for producing cycloolefin addition polymers with catalysts composed of a palladium compound, an ionic boron compound and an organoaluminum compound. Patent Document 2 describes production of cycloolefin addition polymers using catalysts composed of a palladium compound, an ionic boron compound and other components. In Patent Document 3, a catalyst such as nickel or palladium and ethylene or other α-olefin as a chain transfer agent (molecular weight modifier) are used in production of cycloolefin addition polymers. Patent Document 4 describes production of cycloolefins using a high-activity palladium complex catalyst. According to Patent Document 5, cycloolefin addition polymers with controlled molecular weights are produced in the presence of ethylene using catalysts composed of a palladium compound, a phosphine compound of specific cone angle, an ionic boron compound and other components.

If addition (co)polymers from cycloolefin compounds such as norbornene are produced without a modifier to appropriately control the molecular weight, the products are high-molecular compounds having a number-average molecular weight of more than 300,000. Because of such high molecular weight, the polymers have an excessively high melt viscosity or extremely low solubility. Even if the polymers are dissolved, the obtainable solutions have a very high viscosity and show no fluidity, and usually cannot form films or sheets. If the polymers have low molecular weight, formed articles from the polymers show poor mechanical strength and are brittle. Therefore, the molecular weight of polymers has to be controlled such that forming properties and strength are balanced.

For polymers to possess high transparency, oxidation resistance and mechanical strength, it is necessary that impurities such as catalyst residues and unreacted monomers possibly contaminating the polymers be removed sufficiently. However, removing such impurities usually requires complicated steps and great energy. Further, it is known that palladium compounds used in trace amounts cannot be removed adequately by general deashing. Thus, there has been a demand for a production process for cycloolefin addition polymers which does not substantially involve the removing of catalyst residues or unreacted monomers.
Patent Document 1: JP-A-H05-262821
Patent Document 2: JP-A-H07-304834
Patent Document 3: Japanese Patent No. 3476466
Patent Document 4: U.S. Patent No. 6,455,650
Patent Document 5: JP-A-2005-162990
Patent Document 6: JP-A-2005-48060
Non-patent Document 1: Makromol. Chem. Macromol. Symp., Vol. 47, 831 (1991)
Non-patent Document 2: J. Polym. Sci., Part B, Polym. Phys., Vol. 41, 2185 (2003)

### SUMMARY OF THE INVENTION

It is an object of the invention to provide a process whereby cycloolefin addition (co) polymers having excellent heat resistance, transparency and toughness and having a molecular weight controlled such that the (co) polymers can be formed into films and sheets are produced simply by using small amounts of a palladium catalyst and a molecular weight modifier, and no steps are required for removing catalyst residues or unreacted monomers.

It has been found by the present inventors that although the catalyst used in Patent Document 5 provides good activity at polymerization temperatures of 60°C or above, the catalyst life is insufficient to cause much unreacted monomers; further, the polymerization rate is drastically reduced at polymerization temperatures of less than 60°C.

The present inventors have further studied focusing on palladium catalysts and molecular weight modifiers to solve the problems in the background art. And it has been found that in the production of cycloolefin addition (co)polymers, high activity is achieved when the polymerization is performed in the presence of ethene and catalysts including an organic acid salt or β-diketonate compound of palladium, a specific cyclopentylphosphine compound, and an ionic boron compound or ionic aluminum compound while controlling the number-average molecular weight to the range of 10,000 to 200,000. Because of the high activity, a small amount of the palladium catalyst can catalyze the reaction, and amounts of catalyst residues and unreacted monomers are reduced. Further, the ethene has excellent performance in molecular weight control, and in a small amount can efficiently control the molecular weight. The present invention has been completed based on the findings.

The present invention relates to the following [1] to [6].

[1] A process for producing cycloolefin addition (co)polymers comprising addition (co)polymerizing monomers to a cycloolefin addition (co)polymer with a number-average molecular weight of 10,000 to 200,000, the monomers including a cycloolefin compound of Formula (1) below as a main monomer, in the presence of ethene and:
   (a) an organic acid salt of palladium or a β-diketonate compound of palladium;
   (b) a phosphine compound represented by Formula (2) below; and
   (c) a compound selected from an ionic boron compound and an ionic aluminum compound;

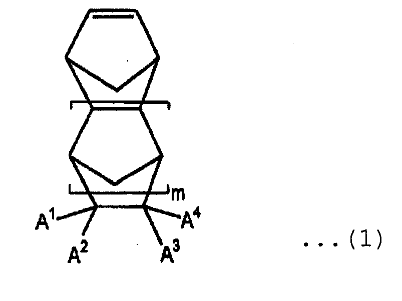

wherein A¹ to A⁴ are each at least one selected from the group consisting of substituent groups selected from a hydrogen atom, C1-15 alkyl groups, C2-10 alkenyl groups, C5-15 cycloalkyl groups, C6-20 aryl groups and C1-10 alkoxyl groups; and the group consisting of polar or functional substituent groups selected from hydrolyzable silyl groups, C2-20 alkoxycarbonyl groups, C4-20 trialkylsiloxycarbonyl groups, C2-20 alkylcarbonyloxy groups, C3-20 alkenylcarboxyoxy groups and oxetanyl groups wherein the substituent groups A¹ to A⁴ may be linked together through an alkylene group, an alkenylene group or an organic group having at least one of an oxygen atom, a nitrogen atom and a sulfur atom;
A¹ and A², or A¹ and A³ may be linked together to form a ring structure or an alkylidene group including the carbon atoms to which they are bonded;
the letter m is 0 or 1;

   P(R¹)₂(R²) (2)

   wherein P is a phosphorus atom, R¹ are each independently a cyclopentyl group or a cyclopentyl group having a C1-3 alkyl group, and R² is a C3-10 hydrocarbon group.

[2] The process for producing cycloolefin addition (co)polymers as described in [1], wherein the (co)polymerizing of the monomers involves:
   (1) 40 to 100 mol% of at least one cycloolefin compound of Formula (1) selected from the group consisting of bicyclo[2.2.1]hepta-2-ene, 5-methylbicyclo[2.2.1]hepta-2-ene, 5-ethylbicyclo[2.2.1]hepta-2-ene, tricyclo[5.2.1.0^{2,6}]deca-8-ene, tetracyclo[6.2.1.1^{3,6}.0^{2,7}]dodeca-4-ene, 9-methyltetracyclo[6.2.1.1^{3,6}.0^{2,7}]dodeca-4-ene and 9-ethyltetracyclo[6.2.1.1^{3,6}.0^{2,7}]dodeca-4-ene; and
   (2) 0 to 60 mol% of at least one cycloolefin compound of Formula (1) selected from the group consisting of 5-alkylbicyclo[2.2.1]hepta-2-enes wherein the alkyl group has 4 to 10 carbon atoms.

[3] The process for producing cycloolefin addition (co)polymers as described in [1] or [2], wherein the organic acid is a carboxylic acid of 1 to 10 carbon atoms.

[4] The process for producing cycloolefin addition (co)polymers as described in any one of [1] to [3], wherein the phosphine compound of Formula (2) is tricyclopentylphosphine.

[5] The process for producing cycloolefin addition (co)polymers as described in any one of [1] to [4], wherein the compound (c) selected from an ionic boron compound and an ionic aluminum compound comprises a carbenium cation and a tetrakis(pentafluorophenyl)borate anion or a tetrakis(perfluoroalkylphenyl)borate anion.

[6] The process for producing cycloolefin addition (co)polymers as described in any one of [1] to [5], wherein the addition (co)polymerization is performed using not more than 0.01 mmol of the palladium compound per 1 mol of the cycloolefin compound of Formula (1).

### ADVANTAGES OF THE INVENTION

According to the present invention, extremely high activity is achieved by use of ethene and catalysts including the specific palladium compound. Depending on combination of the monomers and polymerization conditions, less than 0.001 mol of the palladium compound is sufficient based on 1 mol of the monomers. According to the production process for cycloolefin addition (co) polymers, steps for removing catalyst residues and unreacted monomers are substantially eliminated, and the molecular weight is efficiently controlled simply by using a small amount of the molecular weight modifier.

### PREFERRED EMBODIMENTS FOR CARRYING OUT THE INVENTION

The present invention will be described in detail hereinbelow.

In the production process for cycloolefin addition polymers, the cycloolefin compounds are addition polymerized in the presence of (a) an organic acid salt of palladium or a β-diketonate compound of palladium; (b) a substituted or unsubstituted cyclopentylphosphine compound represented by Formula (2) above; and (c) a compound selected from an ionic boron compound and an ionic aluminum compound.

### <Catalyst component (a)>

The catalyst component (palladium compound) (a) used in the process of the invention is an organic acid salt of palladium or a β-diketonate compound of palladium.

Examples of the palladium compounds include palladium carboxylates and organic palladium sulfonates. Specific examples include the following compounds.

### Palladium carboxylates

The palladium carboxylates include palladium acetate, palladium trifluoroacetate, palladium propionate, palladium butyrate, palladium 2-ethylhexanoate, palladium octanoate, palladium decanoate, palladium dodecanoate, palladium cyclohexanecarboxylate, palladium bis(bicyclo[2.2.1]hepta-5-ene-2-carboxylate), palladium benzoate, palladium phthalate and palladium naphthalenecarboxylate.

### Organic palladium sulfonates

The organic palladium sulfonates include palladium methanesulfonate, palladium trifluoromethanesulfonate, palladium dodecylbenzenesulfonate, palladium p-toluenesulfonate and palladium naphthalenesulfonate.

### β-Diketonate compounds of palladium

The β-diketonate compounds of palladium include palladium bis(acetylacetonate), palladium bis(hexafluoroacetylacetonate) and palladium bis(1-ethoxy-1,3-butanedionate).

Of these palladium compounds, the palladium carboxylates are preferable as the catalyst components (a), and the palladium carboxylates of 1 to 10 carbon atoms are muchore preferable.

The palladium compounds may be used in an amount in terms of palladium compound of 0.0005 to 0.02 mmol, preferably 0.001 to 0.01 mmol, and more preferably 0.002 to 0.005 mmol per 1 mol of the monomers.

### <Catalyst component (b)>

The catalyst component (b) used in the invention is a phosphine compound of Formula (2) which has at least two substituent groups selected from cyclopentyl groups optionally substituted with C1-3 alkyl groups.

Referring to Formula (2), examples of the C3-10 hydrocarbon groups represented by R² include alkyl groups such as n-propyl, isoisopropyl, n-butyl, isoisobutyl, t-butyl, n-pentyl, isoisopentyl, amyl, n-hexyl, n-heptyl, n-octyl, n-nonyl and n-decyl groups; cycloalkyl groups optionally substituted with alkyl groups, such as cyclopentyl, cyclohexyl, methylcyclopentyl, ethylcyclopentyl, methylcyclohexyl and ethylcyclohexyl groups; and aryl groups optionally substituted with alkyl groups, such as phenyl, methylphenyl andd ethylphenyl groups.

Specific examples of the phosphine compounds of Formula (2) include:

tricyclopentylphosphine,
tri(3-methylcyclopentyl)phosphine,
tri(3-ethylcyclopentyl)phosphine,
dicyclopentyl(cyclohexyl)phosphine,
dicyclopentyl(phenyl)phosphine,
dicyclopentyl(isopropyl)phosphine,
dicyclopentyl(t-butyl)phosphine,
di(3-methylcyclopentyl)cyclopentylphosphine,
dicyclopentyl(2-methylphenyl)phosphine and
dicyclopentyl(3-methylcyclohexyl)phosphine.

Of these compounds, tricyclopentylphosphine is most preferably used.

The phosphine compound as the catalyst component (b) provides high activity even at relatively low temperatures of 60°C or below and long catalyst life. Thus, the conversion into a polymer is increased to 99.5% or above with use of the catalyst in the above-mentioned small amount. Further, the concentration of unreacted monomers relative to the obtainable (co) polymer is reduced to not more than 5000 ppm, and preferably not more than 3000 ppm. Furthermore, the phosphine compounds of the invention surpass tri(o-tolyl)phosphine and tricyclohexylphosphine in the capability to enable the molecular weight modifier ethylene to control the molecular weight more efficiently in a reduced amount.

### <Catalyst component (c)>

The catalyst component (c) used in the process of the invention may be an ionic boron compound or an ionic aluminum compound represented by Formula (3) below:

[R³]+[M(R⁴)₄]⁻ (3)

wherein R³ is a C4-25 organic cation selected from carbenium cation, phosphonium cation, ammonium cation and anilinium cation, M is a boron atom or an aluminum atom, and R⁴ is a phenyl group substituted with a fluorine atom or an alkyl fluoride.
Specific examples of the ionic boron compounds and ionic aluminum compounds include:
triphenylcarbenium tetrakis(pentafluorophenyl)borate, tri(p-tolyl)carbenium tetrakis(pentafluorophenyl)borate, triphenylcarbenium
tetrakis[3,5-bis(trifluoromethyl)phenyl]borate, tri(p-tolyl)carbenium
tetrakis[3,5-bis(trifluoromethyl)phenyl]borate,
triphenylcarbenium tetrakis(2,4,6-trifluorophenyl)borate,
triphenylphosphonium tetrakis(pentafluorophenyl)borate,
diphenylphosphonium tetrakis(pentafluorophenyl)borate,
tributylammonium tetrakis(pentafluorophenyl)borate,
N,N-dimethylanilinium tetrakis(pentafluorophenyl)borate,
N,N-diethylanilinium tetrakis(pentafluorophenyl)borate,
triphenylcarbenium tetrakis(pentafluorophenyl)aluminate,
tri(p-tolyl)carbenium tetrakis(pentafluorophenyl)aluminate, triphenylcarbenium
tetrakis[3,5-bis(trifluoromethyl)phenyl]aluminate, tri(p-tolyl)carbenium
tetrakis[3,5-bis(trifluoromethyl)phenyl]aluminate,
triphenylphosphonium tetrakis(pentafluorophenyl)aluminate,
N,N-dimethylanilinium tetrakis(pentafluorophenyl)aluminate and
N,N-diethylanilinium tetrakis(pentafluorophenyl)aluminate.
Of these, the ionic boron compounds wherein the cation is carbenium cation and the anion is tetrakis(pentafluorophenyl)borate anion or tetrakis(perfluoroalkylphenyl)borate anion are preferred.

### <Catalyst component (d)>

The production process of the present invention may optionally involve an organoaluminum compound as a catalyst component (d) together with the catalyst components (a), (b) and (c). The organoaluminum compound functions as a cocatalyst component or to remove polymerization inhibitors in the system, providing higher polymerization activity.

Specific examples of the organoaluminum compounds include alkylaluminoxane compounds such as methylaluminoxane, ethylaluminoxane and butylaluminoxane; and alkylaluminum compounds having at least two alkyl groups per aluminum atom, such as trimethylaluminum, triethylaluminum, triisobutylaluminum, trihexylaluminum, diisobutylaluminum hydride, diethylaluminum chloride, diethylaluminum fluoride and diethylaluminum ethoxide.

The components (a) to (c), and the optional component (d) may be prepared and used by any methods without limitation, and they may be added in any order. For example, they may be added all at once or sequentially to a mixture of the monomers and solvents subjected to the polymerization.

The catalyst component (b) may be used in an amount of 0.1 to 5 mol, and preferably 0.5 to 2 mol per mol of the catalyst component (a) (palladium compound).

The catalyst component (c) may be used in an amount of 0.2 to 10 mol, preferably 0.7 to 5.0 mol, and more preferably 1.0 to 3.0 mol per mol of the catalyst component (a) (palladium compound).

The catalyst component (d) may be used in an amount of 1 to 200 mol per mol of the catalyst component (a) (palladium compound).

In the process of the invention, the above-described catalysts are used in combination with molecular weight modifier ethene. It has been found that the ethene is far superior to other 1-alkenes in performance, in other words, 1/100 to 1/300 mol of ethene relative to 1 mol of 1-alkene can achieve equivalent effects. The more the ethene is used, the lower the number-average molecular weight of the obtainable cycloolefin addition (co)polymer. However, such increased use of ethene does not reduce the polymerization activity. When ethene is used with a catalyst system other than the aforementioned, for example with a catalyst system containing tricyclohexylphosphine, the above molar ratio representing the ethylene superiority decreases to 1/2 to 1/3.

For the obtainable addition (co)polymer to have a number-average molecular weight of 10,000 to 200,000, ethene is used in an amount of 0. 001 to 0.1 mol per mol of the monomer (s).

### <Monomers>

The monomers used in the invention are cycloolefin compounds represented by Formula (1) above.

Of the cycloolefin compounds represented by Formula (1), those that have no functional groups in the substituent groups are preferably used because they have particularly high polymerizability and the obtainable addition (co)polymers have low water absorption and low dielectric constant. Specific examples of such compounds include:
bicyclo[2.2.1]hepta-2-ene,
5-methylbicyclo[2.2.1]hepta-2-ene,
5-ethylbicyclo[2.2.1]hepta-2-ene,
5-butylbicyclo[2.2.1]hepta-2-ene,
5-hexylbicyclo[2.2.1]hepta-2-ene,
5-octylbicyclo[2.2.1]hepta-2-ene,
5-decylbicyclo[2.2.1]hepta-2-ene,
5,6-dimethylbicyclo[2.2.1]hepta-2-ene,
5-methyl-6-ethylbicyclo[2.2.1]hepta-2-ene,
5-cyclohexylbicyclo[2.2.1]hepta-2-ene,
5-phenylbicyclo[2.2.1]hepta-2-ene,
5-benzylbicyclo[2.2.1]hepta-2-ene,
5-indanylbicyclo[2.2.1]hepta-2-ene,
5-vinylbicyclo[2.2.1]hepta-2-ene,
5-vinylidenebicyclo[2.2.1]hepta-2-ene,
5-(1-butenyl)bicyclo[2.2.1]hepta-2-ene,
5-trimethylsilylbicyclo[2.2.1]hepta-2-ene,
5-triethylsilylbicyclo[2.2.1]hepta-2-ene,
5-methoxybicyclo[2.2.1]hepta-2-ene,
5-ethoxybicyclo[2.2.1]hepta-2-ene,
tricyclo[5.2.1.0^{2,6}]deca-8-ene,
3-methyltricyclo[5.2.1.0^{2,6}]deca-8-ene,
tricyclo[5.2.1.0^{2,6}]deca-3,8-diene,
5,6-benzobicyclo[2.2.1]hepta-2-ene,
tricyclo[5.2.1.0^{2,6}]deca-8-ene,
tetracyclo[6.2.1.1^{3,6}.0^{2,7}]dodeca-4-ene,
9-methyltetracyclo[6.2.1.1^{3,6}.0^{2,7}]dodeca-4-ene,
9-ethyltetracyclo[6.2.1.1^{3,6}.0^{2,7}]dodeca-4-ene,
9-propyltetracyclo[6.2.1.1^{3,6}.0^{2,7}]dodeca-4-ene and
9-butyltetracyclo[6.2.1.1^{3,6}.0^{2,7}]dodeca-4-ene. These may be used singly or two or more kinds may be used in combination.

Of the above compounds, a preferred combination is composed of:
(1) 40 to 100 mol% of at least one cycloolefin compound selected from bicyclo[2.2.1]hepta-2-ene, 5-alkylbicyclo[2.2.1]hepta-2-enes wherein the alkyl group has 1 or 2 carbon atoms, tricyclo[5.2.1.0^{2,6}]deca-8-ene, tetracyclo[6.2.1.1^{3,6}.0^{2,7}]dodeca-4-ene and 9-alkyltetracyclo[6.2.1.1^{1,6}.0^{2,7}]dodeca-4-enes wherein the alkyl group has 1 or 2 carbon atoms; and
(2) 0 to 60 mol% of a cycloolefin compound selected from 5-alkylbicyclo[2.2.1]hepta-2-enes wherein the alkyl group has 4 to 10 carbon atoms. The monomer(s) in the above combination may be addition (co)polymerized with a small amount of the palladium catalyst, and the resultant copolymer shows excellent hue even without a step for removing the catalyst. Furthermore, the conversion is high and the amount of residual monomers is extremely small, which enables the elimination of a step for removing unreacted monomers. The addition (co) polymer from the above combination can give tough films and sheets.

In the process of the invention, adhesion or crosslinking sites may be endowed or introduced by using cycloolefin compounds that have functional substituent groups such as ester groups, hydrolyzable silyl groups, acid anhydride groups and oxetanyl groups. The amount of such cycloolefin compounds may be not more than 20 mol%, preferably not more than 10 mol%, and more preferably not more than 5 mol% relative to all the monomers. If the amount exceeds 20 mol%, the polymerizability may be decreased or the obtainable cycloolefin addition (co)polymer may have increased water absorption or dielectric constant. Examples of the cycloolefin compounds for such structural units include the following compounds.

### Cycloolefin compounds having alkoxycarbonyl groups has substituent groups

Examples include:
methyl bicyclo[2.2.1]hepta-5-ene-2-methyl carboxylate,
methyl 2-methylbicyclo[2.2.1]hepta-5-ene-2-methyl carboxylate,
ethyl bicyclo[2.2.1]hepta-5-ene-2-ethyl carboxylate,
ethyl 2-methylbicyclo[2.2.1]hepta-5-ene-2-ethyl carboxylate,
isopropyl bicyclo[2.2.1]hepta-5-ene-2-i-propyl carboxylate,
butyl bicyclo[2.2.1]hepta-5-ene-2-butyl carboxylate,
t-butyl bicyclo[2.2.1]hepta-5-ene-2-t-butyl carboxylate,
methyl tetracyclo[6.2.1.1^{3,6}.0^{2,7}]dodeca-9-ene-4-methyl carboxylate,
methyl 4-methyltetracyclo[6.2.1.1^{3,6}.0^{2,7}]dodeca-9-ene-4-methyl carboxylate,
ethyl 4-methyltetracyclo[6.2.1.1^{3,6}.0^{2,7}]dodeca-9-ene-4-ethyl carboxylate,
t-butyl tetracyclo[6.2.1.1^{3,6}.0^{2,7}]dodeca-9-ene-4-t-butyl carboxylate and
t-butyl 4-methyltetracyclo[6.2.1.1^{3,6}.0^{2,7}]dodeca-9-ene-4-t-butyl carboxylate.

### Cycloolefin compounds having trialkylsiloxycarbonyl groups as substituent groups

Examples include:
triethylsilyl bicyclo[2.2.1]hepta-5-ene-2-triethylsilyl carboxylate,
dimethylbutylsilyl bicyclo[2.2.1]hepta-5-ene-2-dimethylbutyl carboxylate,
diethylbutylsilyl 2-methylbicyclo[2.2.1]hepta-5-ene-2-diethylbutylsilyl
carboxylate and
triethylsilyl tetracyclo[6.2.1.1^{3,6}.0^{2,7}]dodeca-9-ene-4-triethylsilyl carboxylate.

### Cycloolefin compounds having alkylcarbonyloxy groups or alkenylcarbonyloxy groups as substituent groups

Examples include:
acetic acid[bicyclo[2.2.1]hepta-5-ene-2-yl],
acetic acid[bicyclo[2.2.1]hepta-5-ene-2-methyl-2-yl],
propionic acid[bicyclo[2.2.1]hepta-5-ene-2-yl] and propionic acid[bicyclo[2.2.1]hepta-5-ene-2-methyl-2-yl].

### Cycloolefin compounds having acid anhydride groups as substituent groups

Examples include:
bicyclo[2.2.1]hepta-5-ene-2,3-carboxylic acid anhydride, spiro[bicyclo[2.2.1]hepta-5-ene-2,3'-exo-succinic acid anhydride] and
tetracyclo[6.2.1.1^{3,6}.0^{2,7}]dodeca-9-ene-4,5-carboxylic acid anhydride.

### Cycloolefin compounds having carbonimide groups as substituent groups

Examples include:
bicyclo[2.2.1]hepta-5-ene-N-cyclohexyl-2,3-carbonimide,
bicyclo[2.2.1]hepta-5-ene-N-phenyl-2,3-carbonimide,
bicyclo[2.2.1]hepta-5-ene-2-spiro-N-cyclohexyl-succinimide and bicyclo[2.2.1]hepta-5-ene-2-spiro-N-phenyl-succinimide.

### Cycloolefin compounds having oxetanyl groups as substituent groups

Examples include:
5-[(3-ethyl-3-oxetanyl)methoxy]bicyclo[2.2.1]hepta-2-ene,
5-[(3-oxetanyl)methoxy]bicyclo[2.2.1]hepta-2-ene and 3-ethyl-3-oxetanylmethyl
bicyclo[2.2.1]hepta-5-ene-2-(3-ethyl-3-oxetanyl)methyl carboxylate.

### Cycloolefin compounds having hydrolyzable silyl groups as substituent groups

Examples include:
5-trimethoxysilyl bicyclo[2.2.1]hepta-2-ene,
5-triethoxysilyl bicyclo[2.2.1]hepta-2-ene,
5-methyldimethoxysilyl bicyclo[2.2.1]hepta-2-ene,
5-methyldiethoxysilyl bicyclo[2.2.1]hepta-2-ene,
5-methyldichlorosilyl bicyclo[2.2.1]hepta-2-ene,
9-trimethoxysilyl tetracyclo[6.2.1.1^{3,6}.0^{2,7}]dodeca-4-ene,
9-triethoxysilyl tetracyclo[6.2.1.1^{3,6}.0^{2,7}]dodeca-4-ene,
9-methyldimethoxysilyl tetracyclo[6.2.1.1^{3,6}.0^{2,7}]dodeca-4-ene and
9-diethoxychlorosilyl tetracyclo[6.2.1.1^{3,6}.0^{2,7}]dodeca-4-ene.

### Cycloolefin compounds having hydrolyzable silacycloalkyl groups as substituent groups

Examples include:
5-[1'-methyl-2',5'-dioxa-1'-silacyclopentyl]bicyclo[2.2.1]h epta-2-ene,
5-[1'-methyl-2',5'-dioxa-3'-methyl-1'-silacyclopentyl] bicyclo[2.2.1]hepta-2-ene,
5-[1'-methyl-2',5'-dioxa-3',4'-dimethyl-1'-silacyclopentyl] bicyclo[2.2.1]hepta-2-ene,
5-[1'-phenyl-2',5'-dioxa-1'-silacyclopentyl]bicyclo[2.2.1]h epta-2-ene,
5-[1'-methyl-2',6'-dioxa-4'-methyl-1'-silacyclohexyl] bicyclo[2.2.1]hepta-2-ene,
5-[1'-methyl-2',6'-dioxa-4',4'-dimethyl-1'-silacyclohexyl] bicyclo[2.2.1]hepta-2-ene and
9-[1'-methyl-2',5'-dioxa-1'-silacyclopentyl]tetracyclo [6.2.1.1^{3,6}.0^{2,7}]dodeca-4-ene.

The use of the cycloolefin compounds having alkoxycarbonyl groups, acid anhydride groups or carbonimide groups gives improved adhesion to the obtainable addition copolymers. The obtainable addition copolymers are crosslinkable when the cycloolefin compounds having acid-hydrolyzable alkoxycarbonyl groups, hydrolyzable silyl groups such as alkoxysilyl groups, trialkylsiloxycarbonyl groups, or acid-ring-opening oxetanyl groups are used as monomers.

In the invention, a very small part of the molecular weight modifier ethene may be copolymerized with the monomers. The ethene-derived structural units preferably account for not more than 5 mol%, more preferably not more than 2 mol% relative to all the structural units.

### <Addition polymerization>

According to the production process of the invention, the monomers are addition polymerized in a polymerization solvent in the presence of ethene and the multicomponent catalyst. The polymerization may be performed batchwise or continuously. Reactors such as reaction tanks, reaction towers and tubular reactors may be appropriately used. As an example, a tubular continuous reactor equipped with appropriate monomer inlets may be employed. The polymerization may be carried out at temperatures from -20 to 150°C, and preferably from 20 to 100°C. The polymerization solvents are not particularly limited. Exemplary solvents include alicyclic hydrocarbon solvents such as cyclohexane, cyclopentane and methylcyclopentane; aliphatic hydrocarbon solvents such as hexane, heptane and octane; aromatic hydrocarbon solvents such as toluene, benzene, xylene and mesitylene; and halogenated hydrocarbon solvents such as dichloromethane, 1,2-dichloroethylene, 1,1-dichloroethylene, tetrachloroethylene, chlorobenzene and dichlorobenzene. The solvents may be used singly or two or more kinds may be used in combination. Of the solvents, the alicyclic hydrocarbon solvents and the aromatic hydrocarbon solvents are preferred. The solvents may be used in an amount of 0 to 2,000 parts by weight based on 100 parts by weight of the monomers subjected to the polymerization.

The polymerization solvents may contain water at not more than 400 ppm, in which case there will be no disadvantages caused. If the water content in the polymerization solvent exceeds 400 ppm, the polymerization activity may be decreased. The water content in the polymerization solvent in the range of 100 to 400 ppm can slightly reduce the polymerization activity, but the obtainable cycloolefin addition (co)polymer has a narrow molecular weight distribution. Thus, such water content may be positively selected depending on desired properties or applications. The polymerization may be performed in an atmosphere of nitrogen or argon, or in air.

When the monomers used in the process have different polymerizability, the obtainable addition copolymer often has a very nonuniform composition resulting in poor mechanical strength and transparency. To avoid such problems, part of the monomers may be fed in portions or continuously to the polymerization system. The optimum feeding amounts and feeding timing may be selected based on a reactivity ratio (r₁, r₂) representing the reactivity of the monomers that is determined by for example the Fineman-Ross method. The composition of the monomers in the polymerization system may be obtained by analyzing an appropriately sampled polymerization solution for the concentrations of the unreacted monomers and conversions of the monomers, and by following the composition of the copolymer measured by ¹H-NMR. These methods enable obtaining cycloolefin addition (co)polymers with improved transparency or mechanical strength.

In the addition polymerization, the cycloolefin compounds of Formula (1) provide structural units represented by Formula (4) below:

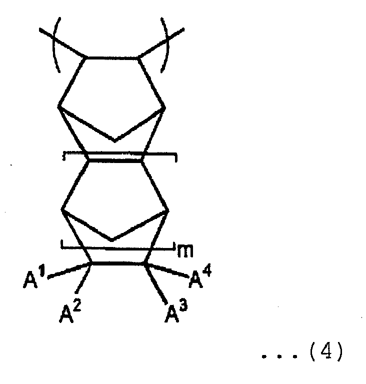

wherein A¹ to A⁴ and m are as defined in Formula (1).
In the addition polymerization, the use of such cycloolefin compounds as tricyclo[5.2.1.0^{2,6}]deca-3,8-diene that have olefinically unsaturated bonds not participating in the polymerization may result in polymers that are unstable to heat or light and are gelled or colored. To avoid such problems, at least 90%, preferably at least 95%, and more preferably at least 99% of the olefinically unsaturated bonds in the polymer are preferably hydrogenated. The hydrogenating methods are not particularly limited and may be conventional. In an exemplary method, the hydrogenation may be performed in an inert solvent in the presence of a hydrogenation catalyst at a hydrogen pressure of 0.5 to 15 MPa and 0 to 200°C. The hydrogenation catalysts include combinations of titanium, cobalt, nickel or palladium compounds with organometallic compounds such as organolithium or organoaluminum compounds; complexes of ruthenium, rhodium or iridium; and inhomogeneous heterogeneous catalysts wherein metals (or oxides thereof) such as nickel, palladium and ruthenium are supported on carriers such as alumina, silica, activated carbon and diatomaceous earth.

According to the production process of the invention, the amounts of the catalyst residues or unreacted monomers are small. Thus, the addition (co) polymers obtained may be formed into films or sheets without steps for removing the catalysts or monomers. However, in cases such as when the addition (co) polymer has been hydrogenated, the catalyst removal may be performed as required. Known methods may be appropriately used for the removal. For example, the reaction solution may be treated with acids such as hydrochloric acid, nitric acid, sulfuric acid, oxalic acid, lactic acid, glycolic acid, oxypropionic acid, oxybutyric acid and ethylenediaminetetraacetic acid, or may be treated with polyvalent amine compounds, triethanolamines, dialkylethanolamines, trimercaptotriazines and thiourea, and the treatment may be followed by extraction with water, alcohols and ketones as required. The use of adsorbents such as diatomaceous earth, silica, alumina and activated carbon is another example. Other removal methods include the use of ion-exchange resins, filtration through zeta potential filters, and solidification of the polymer solution with alcohols such as ethanol and propanol or ketones such as acetone or methyl ethyl ketone.

The glass transition temperature (Tg) of the cycloolefin addition (co)polymers obtained by the process of the invention may be determined as a temperature corresponding to the maximum value led from Tanδ=E"/E' wherein E' is a storage elastic modulus and E" is a loss elastic modulus measured in a dynamic viscoelasticity test. For the cycloolefin addition (co)polymer to show sufficiently high heat resistance, the glass transition temperature is usually from 150 to 450°C, and preferably from 200 to 400°C. When the glass transition temperature is less than 150°C, the heat resistance is poor. When the glass transition temperature exceeds 450°C, the polymers are rigid, and films or sheets from such polymers are often fragile.

The molecular weight of the cycloolefin addition (co)polymers obtained by the process of the invention may be determined appropriately depending on applications. The number-average molecular weight (Mn) measured in o-dichlorobenzene at 120°C by gel permeation chromatography relative to polystyrene standards is in the range of 10,000 to 200,000, and the weight-average molecular weight (Mw) under the same conditions is in the range of 30, 000 to 500, 000. Preferably, the number-average molecular weight (Mn) is from 30,000 to 150,000, and the weight-average molecular weight (Mw) is from 100,000 to 300,000.

When the number-average molecular weight (Mn) is less than 10, 000 or when the weight-average molecular weight (Mw) is less than 30,000, the obtainable films or sheets are fragile. The number-average molecular weight (Mn) exceeding 200,000 or the weight-average molecular weight (Mw) exceeding 500,000 results in very bad workability into films or sheets.

The cycloolefin addition (co)polymers may be formed into films, sheets or membranes by casting or melt-extrusion, and preferably by casting. The casting may involve solvents such as aromatic hydrocarbon compounds such as toluene, benzene, xylene, ethylbenzene and trimethylbenzene; alicyclic hydrocarbon compounds such as cyclopentane, methylcyclopentane, cyclohexane, methylcyclohexane and ethylcyclohexane; aliphatic hydrocarbon compounds such as hexane, heptane, octane, decane and dodecane; and halogenated hydrocarbon compounds such as methylene chloride, 1,2-dichloroethylene, tetrachloroethylene, chlorobenzene and dichlorobenzene. The solvents may be used singly or two or more kinds may be used in combination.

The cycloolefin addition (co)polymers for forming may contain one or more antioxidants selected from phenolic antioxidants, lactone antioxidants, phosphorus antioxidants and thioether antioxidants, whereby the oxidation resistance may be improved. The amount of such compounds is 0.01 to 5 parts by weight based on 100 parts by weight of the addition (co)polymer.

The cycloolefin addition (co)polymers by themselves may form sheets, films and membranes, and and may form in combination with other resins. They may be suitably used in optical components, electric and electronic components, medical tools, insulating materials and packaging materials.

The optical components include light guide plates, protective films, polarizing films, retardation films, touch panels, transparent electrode substrates, optical recording substrates for CD, MD and DVD, TFT substrates, color filter substrates, optical lenses and sealants.

The electric and electronic components include cases, trays, carrier tapes, separation films, washing containers, pipes and tubes.

The medical tools include chemical containers, ampules, syringes, infusion bags, sample containers, test tubes, blood collection tubes, sterilizing containers, pipes and tubes.

The insulating materials include covers for electric wires or cables, insulating materials in OA equipment such as computers, printers and copying machines, and insulating materials in printed circuit boards.

### EXAMPLES

The present invention will be described in detail by examples without limiting the scope of the invention.

The molecular weight and the glass transition temperature in Examples and Comparative Examples, and the total light transmittance, haze, water absorption, linear expansion coefficient and tensile strength and elongation in Test Examples 1 to 4 were measured by the following methods.

### (1) Molecular weight

The molecular weight was measured in o-dichlorobenzene as a solvent at 120°C using gel permeation chromatograph (GPC) 150C (manufactured by Nihon Waters K.K.) with H-type columns (manufactured by TOSOH CORPORATION) relative to polystyrene standards.

### (2) Glass transition temperature

The glass transition temperature of the addition copolymers was determined as a temperature corresponding to the maximum value led from Tanδ=E"/E' wherein E' was a storage elastic modulus and E" was a loss elastic modulus measured on RHEOVIBRON DDV-01FP (manufactured by ORIENTEC Co., LTD.) in a vibration mode of single waveform at a frequency of 10 Hz, a temperature increasing rate of 4°C/min and a vibration amplitude of 2.5 µm.

### (3) Total light transmittance and haze

Films formed with a thickness of 100 µm were tested with visible UV spectrometer U-2010 (manufactured by Hitachi, Ltd.) for light transmittance at 400 nm wavelength. The haze was measured in accordance with JIS K7105 using Haze-Gard plus (manufactured by BYK-Gardner).

### (4) Tensile strength and elongation

These properties were determined by stretching the specimen at a stress rate of 3 mm/min in accordance with JIS K7113.

### (5) Determination of copolymer composition

The methoxysilyl groups were determined based on absorption at 3.5 ppm by ¹H-NMR at 270 MHz in C₆D₆. Or the composition was determined by analyzing the residual monomers in the polymer solution by gas chromatography.

### [Example 1]

A 100 ml pressure-resistant glass bottle was charged in a nitrogen atmosphere with 60 g of dry toluene, 5.3 g (35 mmol) of 5-butylbicyclo[2.2.1]hepta-2-ene and 6.9 g (55 mmol) of a 75 wt% dry toluene solution of bicyclo[2.2.1]hepta-2-ene. The bottle was sealed with a perforated crown having a rubber seal. Further, 9 ml (0.37 mmol) of ethene was blown at 0.1 MPa, and the temperature was raised to 50°C. Subsequently, dry toluene solutions of each of 0.2 µmol of palladium acetate, 0.2 µmol of tricyclopentylphosphine and 0.2 µmol of triphenylcarbeniumtetrakis(pentafluorophenyl)borate were added, and the polymerization was initiated. Both one hour and three hours after the polymerization was initiated, 5 mmol of a dry toluene solution of bicyclo[2.2.1]hepta-2-ene was added. The polymerization was carried out for 7 hours in total. The reaction solution was analyzed by gas chromatography resulting in 99.7% conversion. The residual monomers were 2700 ppm of 5-butylbicyclo[2.2.1]hepta-2-ene and not more than 100 ppm of bicyclo[2.2.1]hepta-2-ene relative to cycloolefin addition copolymer. The solution was added to excess isopropyl alcohol and the precipitate was dried in vacuo to give a cycloolefin addition copolymer. The addition copolymer had a number-average molecular weight of 47,000, a weight-average molecular weight of 183,000 and a glass transition temperature of 260°C.

### [Example 2]

A cycloolefin addition copolymer was obtained with 99.7% conversion in the same manner as in Example 1 except that ethene was used in an amount of 5 ml (0.20 mmol). The addition copolymer had a number-average molecular weight of 78,000, a weight-average molecular weight of 302,000 and a glass transition temperature of 260°C.

### [Example 3]

A cycloolefin addition copolymer was obtained with 99.7% conversion in the same manner as in Example 1 except that palladium acetate was replaced by 0.2 µmol of palladium bis(acetylacetonate). The addition copolymer had a number-average molecular weight of 50,000, a weight-average molecular weight of 190,000 and a glass transition temperature of 265°C.

### [Example 4]

A cycloolefin addition copolymer was obtained with 99.8% conversion in the same manner as in Example 1 except that tricyclopentylphosphine was replaced by dicyclopentyl(cyclohexyl)phosphine. The addition copolymer had a number-average molecular weight of 49,000, a weight-average molecular weight of 195,000 and a glass transition temperature of 265°C.

### [Example 5]

A 100 ml pressure-resistant glass bottle was charged in a nitrogen atmosphere with 60 g of dry toluene, 5.3 g (30 mmol) of 5-hexylbicyclo[2.2.1]hepta-2-ene and 6.9 g (55 mmol) of a 75 wt% dry toluene solution of bicyclo[2.2.1]hepta-2-ene. The bottle was sealed with a perforated crown having a rubber seal. Further, 8 ml of ethene was blown at 0.1 MPa, and the temperature was raised to 50°C. Subsequently, dry toluene solutions of each of 0.2 µmol of palladium acetate, 0.2 µmol of tricyclopentylphosphine and 0.2 µmol of triphenylcarbeniumtetrakis(pentafluorophenyl)borate were added, and the polymerization was initiated. Both one hour and three hours after the polymerization was initiated, 7.5 mmol of a dry toluene solution of bicyclo [2.2.1]hepta-2-ene was added. The polymerization was carried out for 7 hours in total. The reaction solution was analyzed by gas chromatography resulting in 99.7% conversion. The residual monomers were 3200 ppm of 5-hexylbicyclo[2.2.1]hepta-2-ene and not more than 100 ppm of bicyclo[2.2.1]hepta-2-ene relative to cycloolefin addition copolymer. The cycloolefin addition copolymer obtained had a number-average molecular weight of 54,000, a weight-average molecular weight of 207,000 and a glass transition temperature of 225°C.

### [Example 6]

A 100 ml pressure-resistant glass bottle was charged in a nitrogen atmosphere with 60 g of dry cyclohexane, 0.75 g (5 mmol) of 5-butylbicyclo[2.2.1]hepta-2-ene and 9.4 g (75 mmol) of a 75 wt% dry toluene solution of bicyclo[2.2.1]hepta-2-ene. The bottle was sealed with a perforated crown having a rubber seal. Further, 12 ml of ethene was blown at 0.1 MPa, and the temperature was raised to 55°C. Subsequently, dry toluene solutions of each of 0.083 µmol of palladium acetate, 0.083 µmol of tricyclopentylphosphine and 0.090 µmol of triphenylcarbeniumtetrakis(pentafluorophenyl)borate 0.090 µmol were added, and the polymerization was initiated. Both 1.5 hours and 4 hours after the polymerization was initiated, 10 mmol of a dry toluene solution of bicyclo [2. 2. 1] hepta-2-ene was added. The polymerization was carried out for 10 hours in total, and 99.6% conversion was achieved. The molar ratio of the palladium compound to all the monomers was only less than 1/1,000,000. The residual monomers were 3600 ppm of 5-butylbicyclo[2.2.1]hepta-2-ene and 200 ppm of bicyclo[2.2.1]hepta-2-ene relative to cycloolefin addition copolymer. The cycloolefin addition copolymer obtained had a number-average molecular weight of 61,000, a weight-average molecular weight of 223,000 and a glass transition temperature of 290°C.

### [Example 7]

A cycloolefin addition copolymer was obtained with 99.8% conversion in the same manner as in Example 1 except that the 100 ml pressure-resistant glass bottle was not purged with nitrogen and 60 g of toluene containing 230 ppm of water was used. The addition copolymer had a number-average molecular weight of 48,000, a weight-average molecular weight of 156,000 and a glass transition temperature of 260°C.

### [Comparative Example 1]

The procedures in Example 1 were repeated except that ethene was replaced by 150 ml of 1-propene gas. The viscosity of the reaction solution drastically increased and the solution eventually lost fluidity. The conversion obtained from the solid concentration leveled off at 93%. The reaction solution was diluted with 300 ml of cyclohexane, and was added to 2 L of isopropyl alcohol. The precipitate was dried in vacuo to give a cycloolefin addition copolymer. The addition copolymer had a number-average molecular weight of 325,000 and a weight-average molecular weight of 1,120,000. Although the molecular weight modifier was used in a far increased amount than in Examples, it gave only a small effect.

### [Comparative Example 2]

A cycloolefin addition copolymer was obtained with 98% conversion in the same manner as in Example 1 except that the molecular weight modifier was changed from ethene to 7.6 g (90 mmol) of 1-hexene. According to gas chromatography, the residual monomers were 19,800 ppm of 5-butylbicyclo[2.2.1]hepta-2-ene and 500 ppm of bicyclo[2.2.1]hepta-2-ene relative to cycloolefin addition copolymer. The addition copolymer had a number-average molecular weight of 57,000, a weight-average molecular weight of 201,000 and a glass transition temperature of 265°C. To achieve these results, the molecular weight modifier had to be used in a far increased amount than those in Examples.

### [Comparative Example 3]

The procedures in Example 1 were repeated except that tricyclopentylphosphine was not used, but the polymerization did not substantially take place. The polymerization was then induced by additionally adding 2.0 µmol of each of palladium acetate and triphenylcarbeniumtetrakis(pentafluorophenyl)borate. The polymerization was carried out for 7 hours in total. As a result, 92% of the monomers were converted to an addition copolymer. According to gas chromatography with respect to the unreacted monomers, the copolymer was found to contain 33 mol% of structural units derived from 5-butylbicyclo[2.2.1]hepta-2-ene. The solution of the addition copolymer was diluted 1.5 times and was added to excess isopropyl alcohol. The precipitate was dried in vacuo to give a cycloolefin addition copolymer. The addition copolymer had a number-average molecular weight (Mn) of 256,000, a weight-average molecular weight (Mw) of 930,000 and a glass transition temperature of 280°C. The addition copolymer was brown.

### [Comparative Example 4]

The procedures in Example 1 were repeated except that tricyclopentylphosphine was replaced by tricyclohexylphosphine. The polymerization was carried out for 7 hours, and the conversion was 75%, indicating that the polymerization activity was far lower than in Example 1. The addition copolymer had a number-average molecular weight of 151,000, a weight-average molecular weight of 378,000 and a glass transition temperature of 265°C. The molecular weight was higher than when tricyclopentylphosphine was used.

### [Comparative Example 5]

The procedures in Example 1 were repeated except that tricyclopentylphosphine was replaced by tricyclohexylphosphine and the polymerization temperature was changed to 60°C. Performing the polymerization for 7 hours resulted in 98.2% conversion, and the conversion did not increase thereafter, indicating that the catalyst had been deactivated. The addition copolymer had a number-average molecular weight of 80,000, a weight-average molecular weight of 311,000 and a glass transition temperature of 265°C. The molecular weight was higher than when tricyclopentylphosphine was used.

### [Example 8]

A 100 ml pressure-resistant glass bottle was charged in a nitrogen atmosphere with 45 g of dry toluene, 15 g of dry cyclohexane, 0.70 g (3.25 mmol) of 5-trimethoxysilyl bicyclo[2.2.1]hepta-2-ene and 11.9 g (95 mmol) of a 75 wt% dry toluene solution of bicyclo[2.2.1]hepta-2-ene. The bottle was sealed with a perforated crown having a rubber seal. Further, 13 ml of ethene was blown at 0.1 MPa, and the temperature was raised to 55°C. Subsequently, dry toluene solutions of each of 0.083 µmol of palladium acetate, 0.083 µmol of tricyclopentylphosphine and 0.090 µmol of triphenylcarbeniumtetrakis(pentafluorophenyl)borate were added, and the polymerization was initiated. After 30 minutes, 60 minutes, 90 minutes and 150 minutes after the polymerization was initiated, 0.75 mmol, 0.5 mmol, 0.25 mmol and 0.25 mmol, respectively, of 5-trimethoxysilyl bicyclo[2.2.1]hepta-2-ene was added. The polymerization was carried out for 10 hours in total, and the conversion was 99.6%. The solution was added to excess isopropyl alcohol and the precipitate was dried in vacuo to give a cycloolefin addition copolymer. The addition copolymer had a number-average molecular weight of 58,000, a weight-average molecular weight of 205,000 and a glass transition temperature of 300°C.

### [Comparative Example 6]

The procedures in Example 1 were repeated except that tricyclopentylphosphine was replaced by triphenylphosphine. The viscosity of the reaction solution drastically increased and the solution eventually became clouded and solidified. The conversion obtained from the solid concentration leveled off at 90%. The cycloolefin addition copolymer obtained was not soluble, and the measurement of molecular weight was impossible.

### [Comparative Example 7]

The procedures in Example 6 were repeated except that palladium acetate and tricyclopentylphosphine were replaced by 1.0 µmol of tetrakis(tricyclopentylphosphine)palladium and that triphenylcarbeniumtetrakis(pentafluorophenyl)borate was used in an amount of 1.0 µmol. Performing the polymerization for 7 hours resulted in 5.0% conversion. The results showed that the use of palladium compounds not having an organic acid anion or a β-diketonate anion drastically reduced the polymerization activity.

### [Comparative Example 8]

A 100 ml pressure-resistant glass bottle was charged in a nitrogen atmosphere with 50 g of dry toluene, 0.75 g (5 mmol) of 5-butylbicyclo[2.2.1]hepta-2-ene, 11.9 g (95 mmol) of a 75 wt% dry toluene solution and 0.084 g (1.0 mmol) of molecular weight modifier 1-hexene. The bottle was sealed with a perforated crown having a rubber seal, and the temperature was adjusted to 30°C. Subsequently, 0.025 mmol of hexafluoroantimonic acid-modified nickel 2-ethylhexanoate (HSbF₆/Ni=1), 0.225 mmol of boron trifluoride-diethyl ether complex and 0.25 mmol of triethylaluminum were added, and the polymerization was performed for 2 hours resulting in 96% conversion. The conversion did not substantially increase thereafter. The solution of the addition polymer was combined with 1 g of lactic acid, followed by stirring. The solution was added to excess isopropyl alcohol and the precipitate was dried in vacuo to give a cycloolefin addition copolymer. The addition copolymer contained 4.8 mol% of structural units derived from 5-butylbicyclo[2.2.1]hepta-2-ene. The copolymer had a number-average molecular weight of 108,000, a weight-average molecular weight of 216,000 and a glass transition temperature of 335°C.

### [Test Example 1]

100 Parts by weight of the addition copolymer from Example 1 was blended with 0.5 part by weight of each of pentaerythrithyl tetrakis[3-(3,5-di-t-butyl-4-hydroxyphenyl)] propionate and tris(2,4-di-t-butylphenyl)phosphite as antioxidants. The resultant composition was dissolved in toluene to give a solution with a solid concentration of 21%. The solution was cast and dried to form films having a thickness of 100 µm. The films were tested for light transmittance, haze, breaking strength and break elongation. The results are set forth in Table 1.

### [Test Example 2]

Films were produced and tested in the same manner as in Test Example 1 except that the addition copolymer from Example 6 was used and the solvent was changed to cyclohexane. The results are set forth in Table 1.

### [Test Example 3]

100 Parts by weight of the addition copolymer from Example 8 was blended with 0.5 part by weight of each of pentaerythrithyl tetrakis[3-(3,5-di-t-butyl-4-hydroxyphenyl)] propionate and tris(2,4-di-t-butylphenyl)phosphite as antioxidants and 0.7 part by weight of cyclohexyl p-toluenesulfonate as a heat-induced acid generator. The resultant composition was dissolved in cyclohexane to give a solution with a solid concentration of 21%. The solution was cast to form films having a thickness of 100 µm. The films were exposed to overheated vapor at 180°C for 30 minutes, and were thereby crosslinked. The crosslinked films did not swell or dissolve in liquid crystal, cyclohexane, toluene, dimethylsulfoxide, N-methylpyrrolidone, methanol, acetone, hydrochloric acid, and tetramethylammonium hydroxide solutions. The crosslinked films were tested for the above properties. The results are set forth in Table 1.

### [Test Example 3]

Films were produced and tested in the same manner as in Test Example 1 except that the addition copolymer from Comparative Example 8 was used. The results are set forth in Table 1. The films of the addition copolymer that had been produced with the nickel catalyst were fragile and clearly inferior in strength to the films of Test Examples 1 to 3.

**[Table 1]**

| Test Ex. | Mw | Tg (°C) | Light transmittance (%) (400 nm) | Haze (%) | Breaking strength (MPa) | Break elongation (%) |
|---|---|---|---|---|---|---|
| Test Ex. 1 | 183,000 | 260 | 90 | 0.4 | 55 | 7.5 |
| Test Ex. 2 | 223,000 | 290 | 90 | 0.4 | 79 | 8.9 |
| Test Ex. 3 | 205,000 | 300 | 89 | 0.5 | 80 | 8.0 |
| Test Ex. 4 | 216,000 | 335 | 89 | 0.6 | 30 | 3.8 |

### INDUSTRIAL APPLICABILITY

The cycloolefin addition (co)polymers are formed into sheets, films, membranes and other desired shapes and are suitably used in optical components, electric and electronic components, medical tools, insulating materials and packaging materials.

## Claims

1. A process for producing cycloolefin addition (co)polymers comprising addition (co)polymerizing monomers to a cycloolefin addition (co)polymer with a number-average molecular weight of 10,000 to 200,000, the monomers including a cycloolefin compound of Formula (1) below as a main monomer, in the presence of ethene and:
(a) an organic acid salt of palladium or a β-diketonate compound of palladium;
(b) a phosphine compound represented by Formula (2) below; and
(c) a compound selected from an ionic boron compound and an ionic aluminum compound; 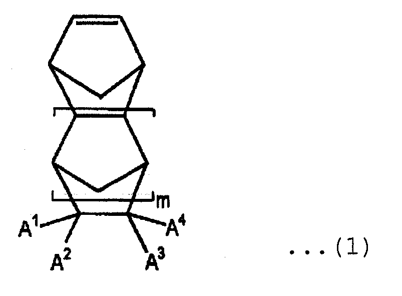
wherein A¹ to A⁴ are each at least one selected from the group consisting of substituent groups selected from a hydrogen atom, C1-15 alkyl groups, C2-10 alkenyl groups, C5-15 cycloalkyl groups, C6-20 aryl groups and C1-10 alkoxyl groups; and the group consisting of polar or functional substituent groups selected from hydrolyzable silyl groups, C2-20 alkoxycarbonyl groups, C4-20 trialkylsiloxycarbonyl groups, C2-20 alkylcarbonyloxy groups, C3-20 alkenylcarboxyoxy groups and oxetanyl groups wherein the substituent groups A¹ to A⁴ may be linked together through an alkylene group, an alkenylene group or an organic group having at least one of an oxygen atom, a nitrogen atom and a sulfur atom;
A¹ and A², or A¹ and A³ may be linked together to form a ring structure or an alkylidene group including the carbon atoms to which they are bonded;
the letter m is 0 or 1;
P(R¹)₂(R²) (2)
wherein P is a phosphorus atom, R¹ are each independently a cyclopentyl group or a cyclopentyl group having a C1-3 alkyl group, and R² is a C3-10 hydrocarbon group.

2. The process for producing cycloolefin addition (co) polymers according to claim 1, wherein the (co) polymerizing of the monomers involves:
(1) 40 to 100 mol% of at least one cycloolefin compound of Formula (1) selected from the group consisting of bicyclo[2.2.1]hepta-2-ene, 5-methylbicyclo[2.2.1]hepta-2-ene, 5-ethylbicyclo[2.2.1]hepta-2-ene, tricyclo[5.2.1.0^{2,6}]deca-8-ene, tetracyclo[6.2.1.1^{3,6}.0^{2,7}]dodeca-4-ene, 9-methyltetracyclo[6.2.1.1^{3,6}.0^{2,7}]dodeca-4-ene and 9-ethyltetracyclo[6.2.1.1^{3,6}.0^{2,7}]dodeca-4-ene; and
(2) 0 to 60 mol% of at least one cycloolefin compound of Formula (1) selected from the group consisting of 5-alkylbicyclo[2.2.1]hepta-2-enes wherein the alkyl group has 4 to 10 carbon atoms.

3. The process for producing cycloolefin addition (co) polymers according to claim 1 or 2, wherein the organic acid is a carboxylic acid of 1 to 10 carbon atoms.

4. The process for producing cycloolefin addition (co)polymers according to any one of claims 1 to 3, wherein the phosphine compound of Formula (2) is tricyclopentylphosphine.

5. The process for producing cycloolefin addition (co)polymers according to any one of claims 1 to 4, wherein the compound (c) selected from an ionic boron compound and an ionic aluminum compound comprises a carbenium cation and a tetrakis(pentafluorophenyl)borate anion or a tetrakis(perfluoroalkylphenyl)borate anion.

6. The process for producing cycloolefin addition (co) polymers according to any one of claims 1 to 5, wherein the addition (co)polymerization is performed using not more than 0.01 mmol of the palladium compound per 1 mol of the cycloolefin compound of Formula (1).
